# EUROPEAN PATENT APPLICATION

(11) **EP 1 249 993 A1**
(43) Date of publication of application: **16.10.2002**
(21) Application number: 01303388.1
(22) Date of filing: 11.04.2001
(51) Int. Cl.: H04M 3/54, H04M 3/533, H04M 3/42, H04M 3/20

(54) **Call forwarding (diversion) with retrieval function on diversion to voice mail**

(71) Applicant: LUCENT TECHNOLOGIES INC., Murray Hill, New Jersey 07974-0636 (US)
(72) Inventor: Jesterhoudt, Ron, Almere, 1339 HS (NL)
(74) Representative: Sarup, David Alexander

(57) **Abstract**

The invention relates to a voice communication system comprising multiple communication units and at least one telephone exchange for establishing a first communication link between a first communication unit of the communication system and a second communication unit of the communication system upon initialisation of the first communication unit, wherein the second communication unit is arranged to automatically foward the first communication link to a third communication unit. The telephone exchange allowing the second communication unit to re-establish the first communication link from the transferred communication link.

Application of the above is caller A, calls caller B that has the phonecall foward to voicemail on busy or no answer (CFB or CFNA). Caller B notices the call foward because of audio-visual information (alerting tone) and picks the call up that was fowarded to voicemail in order to talk in real time to caller A.

## Description

The invention relates to a data communication system comprising a multiple of communication units and at least one telephone exchange for establishing at least a first communication link between a first communication unit of the communication system and a second communication unit of the communication system upon initialisation of the first communication unit, wherein the data communication system is further arranged for automatically transferring the first communication link into a transferred communication link between the first communication unit and a third communication unit of the communication system when the data communication system is in a transfer-mode with respect to the second communication unit.

The invention also relates to a telephone exchange for establishing at least a first communication link between a first communication unit and a second communication unit upon initialisation of the first communication unit, wherein the telephone exchange is further arranged for automatically transferring the first communication link into a transferred communication link between the first communication unit and a third communication unit when the telephone exchange is in a transfer-mode with respect to the second communication unit.

The above mentioned data communication system and the above mentioned telephone exchange are known in actual practice. Herewith a first user can give a call via the first communication unit to the second communication unit of a second user. In this case the data communication system establishes the first communication link between the first communication unit and the second communication unit upon initialisation of the first communication unit. Then, if the data communication unit is in the transfer-mode with respect to the second communication unit the first communication link is automatically transferred into the third communication unit of a third user upon initialisation of the first communication unit. For this the transferred communication link is established between the first communication unit and the third communication unit.

A disadvantage of the known data communication system and the known telephone exchange is that the second user loses control over the transferred communication link. For example, it is impossible for the second user to retrieve the transferred communication link.

It is an object of the invention to meet said disadvantage of the known data communication system. This is achieved with the data communication system of the invention which is characterised in that the data communication system is arranged such that the second communication unit can re-establish the first communication link from the transferred data communication link. In this way the second user can retrieve the transferred communication link.

An embodiment of the data communication system according to the invention is characterised in that the data communication system is further arranged for transmitting a notification-signal to the second communication unit when the first communication link is transferred into the transferred communication link. The notification signal can draw the attention of the second user that a communication link which has been directed to the second communication unit is transferred automatically to the third user. The notification-signal can be a Ping-ring signal or an ISDN notification-signal. Subsequently the second user can retrieve the transferred communication link via the at least one telephone exchange.

An advanced embodiment of the data communication system of the invention is characterised in that the data communication system comprises a wireless mobile data communication network comprising at least one of said communication units. The data communication system can also comprise a conventional fixed data communication network comprising at least one of said communication units.

The telephone exchange according to the invention is characterised in that the telephone exchange is arranged such that the second communication unit can re-establish the first communication link from the transferred communication link.

In the accompanying drawings, in which several modes of carrying out the present invention are shown for illustrative purposes:
Figure 1 is a diagram schematically showing a first data communication system according to the invention.
Figure 2 is a diagram schematically showing a second data communication system according to the invention.
Figure 3 is a diagram schematically showing a third data communication system according to the invention which comprises two telephone exchanges.
Figure 4 is a diagram schematically showing a fourth data communication system according to the invention which comprises three telephone exchanges.

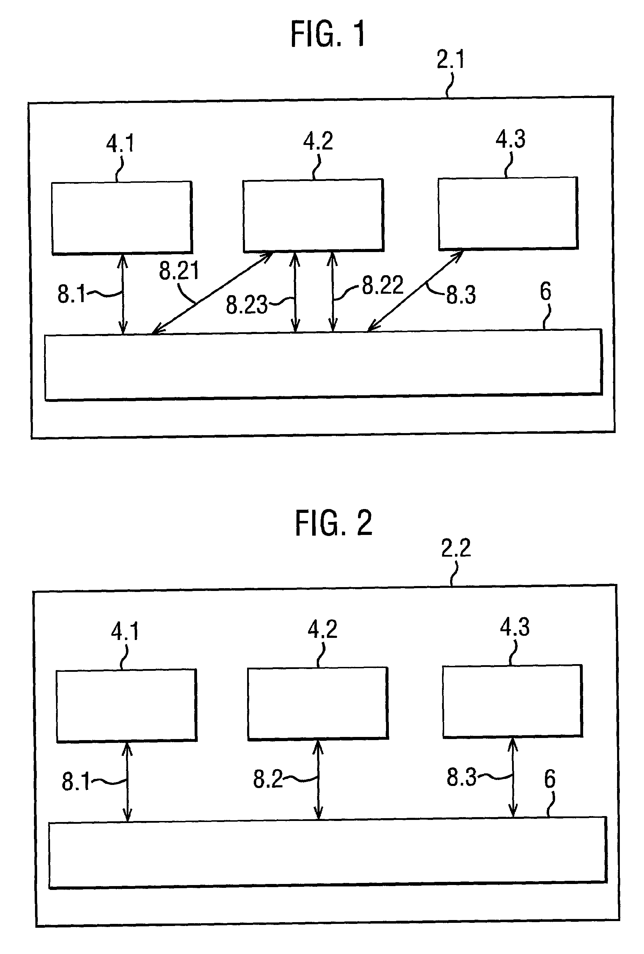

Figure 1 is a schematic diagram of a data communication system 2.1. The data communication system 2.1 comprises a multiple of communication units 4.1, 4.2, 4.3. Each communication unit can be used by one or more users. In this example the first communication unit is used by a first user, the second communication system by a second user and the third communication unit by a third user. The data communication system 2.1 also comprises a telephone exchange 6 for establishing at least a first communication link 8.1, 8.21 between the first communication unit 4.1 and the second communication unit 4.2. The first communication link 8.1, 8.21 is established upon initialisation of the first communication unit 4.1. This initialisation is performed by the first user which calls the second user by entering the identification code of the second communication unit 4.2 into the first communication unit 4.1.

Then, if the data communication system 2.1 is in a transfer-mode with respect to the second communication unit 4.2 (in this example data communication system 2.1 can be put in said transfer-mode upon reception by telephone exchange 6 of a switch-to-transfer-mode signal from the second communication system 2.1), the first communication link 8.1, 8.21 is automatically transferred into a transferred communication link 8.1, 8.21, 8.22, 8.3 between the first communication unit 4.1 and the third communication unit 4.3. In this example the transferred data communication link still comprises sublinks with communication unit 4.2. (As will be explained later it is equally possible that a transferred link resulting from the first communication link does not comprise a sublink with the second communication unit 4.2). After this the second user of the second communication unit 4.2 can re-establish the first communication link 8.1, 8.21 from the transferred data communication link 8.1, 8.21, 8.22, 8.3 via the second communication unit 4.2. A first example of re-establishing the first communication link is a situation wherein the sublink 8.22 is just disconnected upon a control message "retrieve communication link" which has been sent by the second communication unit 4.2 to the telephone exchange 6. In a second example the second user transmits a control message "retrieve communication link" to the telephone exchange 6 via the sublink 8.21, the sublink 8.22 or a separate link 8.23. Subsequently, the telephone exchange 6 can re-establisch the first communication link 8.1, 8.21.

The data communication system 2.1 is arranged for transmitting a notification-signal to the second communication unit 4.2 when the first communication link 8.1, 8.21 is transferred. In this example the notification signal is transmitted by the telephone exchange 6 to the second communication unit 4.2 via one of the (sub)links 8.21, 8.22 or 8.23. The second user of the second communication unit 4.2 will be informed via the notification signal that a communication link will be automatically, or already is, transferred from the second communication unit to the third communication unit. This offers the second user the possibility to re-establish the (already) transferred communication link. In a particular example of an analog telephone exchange the notification-signal can be a Ping-ring signal. In a particular example of a digital telephone exchange the notification signal can be an ISDN notification signal.

In this example the third data communication unit 4.3 is a Voice Mail Box. So, when a first user calls the second data communication unit 4.2 via the first communication link 8.1, 8.21 and the second user does not reply the call, then subsequently the first data communication link 8.1, 8.21 is transferred to the Voice Mail Box. This is also called Call diversion on no reply. Next, if the second user was to late to answer the call, the second user can retrieve the first data communication link (and thus the call) in the manner which has been explained hereinbefore. In this case it is not necessary that a notification signal is transmitted to the second data communication unit 4.2 since the second user has already been notified about the transfer via the call via the first communication link.

The data communication system 2.1, and more in particular the telephone exchange 6, can be switched to a transfer-mode upon reception of a switch-to-transfer-mode signal, which signal can be transmitted by the second user from the second data communication unit 4.2. When the data communication system 2.1 is in the transfer-mode with respect to the second data communication unit 4.2 all communication links which are directed to the second data communication unit 4.2 will automatically be transferred into the transferred data communication link 8.1, 8.21, 8.22, 8.3.

The switch-to-transfer-mode signal comprises transfer-mode-information relating to the second communication unit 4.2 and the third communication unit 4.3. The transfer-mode-information is stored in memory means of the data communication system 2.1.

Upon reception of a switch-to-normal-mode signal, which signal can be transmitted by the second user from the second data communication unit 4.2, the data communication system 2.1 switches from transfer-mode to a normal-mode with respect to the second communication unit 4.2. Hereby the transfer-mode-information in said memory means is erased and communication links which are established to the second data communication unit 4.2 are no longer transferred to the third data communication unit 4.3.

Figure 2 schematically shows a second data communication system 2.2. It is noted that corresponding parts in the figures 1 and 2 are referred to with corresponding numbers. Furthermore the data communication system 2.2 mainly operates in the same manner as the data communication system 2.1. If the data communication system 2.2 is in a transfer-mode with respect to the second data communication unit 4.2 then the first data communication link 8.1, 8.2 is transferred into a transferred data communication link 8.1, 8.3 to the third data communication unit. In this case the transferred communication link does not comprise a sublink with the second communication unit 4.2. This means that the first data communication link is "directly" transferred (this is also called "immediate diversion"). Eventually a notification signal can be transmitted from the telephone exchange 6 to the second data communication system 4.2 to inform the second user of the second data communication system 4.2 that a transfer has taken place. Subsequently the second user can re-establish the first communication link, for example by transmitting a "retrieve communication link" command to the telephone exchange 6.

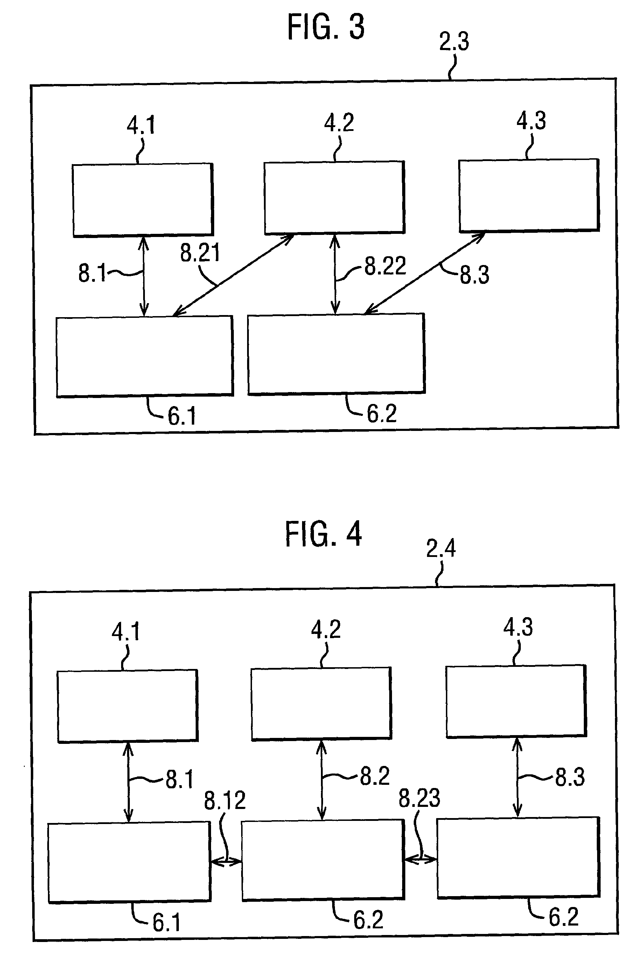

Figure 3 schematically shows a third data communication system 2.3. It is noted that corresponding parts in the figures 1 and 3 are referred to with corresponding numbers. The data communication system 2.3 operates in a similar way as the data communication system 2.1. However, contrary to the systems 2.1 and 2.2 the data communication system 2.3 comprises two telephone exchanges 6.1 and 6.2. Herewith the first data communication unit 4.1 communicates via data communication link 8.1 with the first telephone exchange 6.1. Furthermore the first telephone exchange 6.1 communicates to the second data communication unit 4.2 via the data link 8.21. The second telephone exchange 6.2 communicates with the second data communication unit 4.2 via the data link 8.22 and with the third data communication unit 4.3 via the data link 8.3. (The telephone exchange 6.1 and/or the telephone exchange 6.2 can comprise memory means for storing transfer-mode-information).

Figure 4 schematically shows a fourth data communication system 2.4. It is noted that corresponding parts in the figures 1 and 4 are referred to with corresponding numbers. Upon initialisation of the first data communication unit 4.1 a first data communication link 8.1, 8.12, 8.2 between the first data communication unit 4.1 and the second data communication unit 4.2 is established by the first telephone exchanges 6.1 and 6.2. The sublink 8.12 is established by the first telephone exchange 6.1. Then, if the data communication system 2.4 is in a transfer mode with respect to the data communication unit 4.2, the first data communication link 8.1, 8.12, 8.2 is transferred into the transferred data communication link 8.1, 8.12, 8.23, 8.3 to the third communication unit 4.3 via the three telephone exchanges 6.1, 6.2 and 6.3. Note that the transferred data communication link does not comprise a sublink with the second data communication unit 4.2 (direct transfer). Therefore, if the second user of the second data communication unit 4.2 wants to retrieve the transferred data communication link 8.1, 8.12, 8.23, 8.3 a new data communication link between the unit 4.2 and the telephone exchange 6.2 has to be established for transmitting a "retrieve communication link" command to the telephone exchange 6.2. Next, the second telephone exchange 6.2 can re-establish the first data communication link from the transferred data communication link.

It is noted that the data communication system can comprise a wireless mobile data communication network comprising at least one of said communication units and/or a fixed data communication network comprising at least one of said communication units.

The present invention has been described in what is considered to represent its preferred embodiments. However, it should be noted that the invention can be practised otherwise than as specifically illustrated and described without departing from its spirit or scope. For example, the telephone exchange(s) in the data communicating system can be analog and/or digital exchanges or a combination thereof. Furthermore the data communication system can comprise a digital highway for internet applications, wherein the data communication links are used for transferring digital data packages to internet addresses.

## Claims

1. Data communication system comprising a multiple of communication units and at least one telephone exchange for establishing at least a first communication link between a first communication unit of the communication system and a second communication unit of the communication system upon initialisation of the first communication unit, wherein the data communication system is further arranged for automatically transferring the first communication link into a transferred communication link between the first communication unit and a third communication unit of the communication system when the data communication system is in a transfer-mode with respect to the second communication unit,
**characterised in that**,
the data communication system is arranged such that the second communication unit can re-establish the first communication link from the transferred communication link.

2. Data communication system according claim 1,
**characterised in that**,
the data communication system is further arranged for transmitting a notification-signal to the second communication unit when the first communication link is transferred into the transferred communication link.

3. Data communication system according to claim 2,
**characterised in that**,
the notification-signal is a Ping-ring signal to be transmitted by the at least one telephone exchange.

4. Data communication system according to claim 2,
**characterised in that**,
the notification-signal is an ISDN notification signal to be transmitted by the at least one telephone exchange.

5. Data communication system according to one of the preceding claims,
**characterised in that**,
the data communication system is arranged for switching to said transfer-mode upon reception of a switch-to-transfer-mode signal from the second data communication unit, wherein the switch-to-transfer-mode signal comprises transfer-mode-information relating to the second communication unit and the third communication unit, and wherein the data communication system comprises memory means for storing said transfer-mode-information.

6. Data communication system according to claim 5,
**characterised in that**,
the data communication system is arranged for switching from said transfer-mode to a normal-mode with respect to the second communication unit and for erasing said transfer-mode-information in said memory means upon reception of a switch-to-normal-mode signal from the second communication unit.

7. Data communication system according to one of the preceding claims,
**characterised in that**,
the data communication system comprises a wireless mobile data communication network comprising at least one of said communication units.

8. Data communication system according to one of the preceding claims,
**characterised in that**,
the data communication system comprises a conventional fixed data communication network comprising at least one of said communication units.

9. Telephone exchange for establishing at least a first communication link between a first communication unit and a second communication unit upon initialisation of the first communication unit, wherein the telephone exchange is further arranged for automatically transferring the first communication link into a transferred communication link between the first communication unit and a third communication unit when the telephone exchange is in a transfer-mode with respect to the second communication unit,
**characterised in that**,
the telephone exchange is arranged such that the second communication unit can re-establish the first communication link from the transferred communication link.
